# EUROPÄISCHE PATENTSCHRIFT

(11) **EP 2 717 000 B1**
(45) Veröffentlichungstag und Bekanntmachung des Hinweises auf die Patenterteilung: **26.08.2020**
(21) Anmeldenummer: 12187608.0
(22) Anmeldetag: 08.10.2012
(51) Int. Cl.: F25B 49/02

(54) **KÄLTEMASCHINE UND VERFAHREN ZUM BETRIEB DER KÄLTEMASCHINE**
REFRIGERATION SYSTEM AND METHOD FOR OPERATING SAID REFRIGERATION SYSTEM
MACHINE FRIGORIFIQUE ET PROCÉDÉ DESTINÉ AU FONCTIONNEMENT D'UNE MACHINE FRIGORIFIQUE

(43) Veröffentlichungstag der Anmeldung: 09.04.2014
(73) Patentinhaber: Emerson Climate Technologies GmbH, 13507 Berlin (DE)
(72) Erfinder: Van Herstraeten, Jean-Pierre, 4980 Trois-Ponts (BE); Steils, Raymond, 4053 Embourg (BE); Renard, Jean-François, 4671 Housse (BE)
(74) Vertreter: Manitz Finsterwald Patent- und Rechtsanwaltspartnerschaft mbB

(56) Entgegenhaltungen:
- EP-A2- 0 522 878
- WO-A1-2006/072838
- WO-A1-2009/101781
- GB-A- 2 450 228
- JP-A- 61 272 483
- US-A- 5 428 965
- US-A1- 2007 012 055
- US-A1- 2009 093 911

## Beschreibung

Die vorliegende Erfindung betrifft eine Kältemaschine, insbesondere eine Wärmepumpe, welche einen vom Kältemittel durchströmten Kältekreislauf mit einem drehzahlgeregelten Verdichter umfasst; und ein Verfahren zum Betreiben der Kältemaschine.

Kältemaschinen sowie Verfahren zum Betreiben derselben sind grundsätzlich bekannt, wobei Kältemaschinen generell an einem Verdampfer eine Kühlwirkung und an einem Verflüssiger eine Heizwirkung erzeugen. So werden zum Beispiel Wärmepumpen dazu verwendet, Wärme, die im Erdreich, im Grundwasser oder in der Luft gespeichert ist, in Heizwärme umzuwandeln. Idealerweise übersteigt die dabei erzeugte Heizwärme bzw. Heizenergie eine zum Betrieb der Wärmepumpe notwendige elektrische Energie um ein Mehrfaches. Wärmepumpen stellen somit eine Ressourcen schonende Möglichkeit zur Wärmeversorgung dar. Weitere Beispiele für Kältemaschinen sind Kühlschränke, Gefrierschränke oder -truhen oder Klimaanlagen.

Um variabel auf verschiedene thermische Leistungsanforderungen reagieren zu können, umfassen Kältemaschinen drehzahlgeregelte Verdichter. Eine Drehzahl des Verdichters wird dabei üblicherweise derart eingestellt, dass eine Leistungsanforderung an die Kältemaschine erfüllt wird. Dabei besteht die Gefahr, dass der Verdichter durch einen Betrieb bei zu hohen oder zu niedrigen Drehzahlen beschädigt wird. Die

US 2007/012055 A1 beschreibt ein Verfahren zum Betreiben einer Kältemaschine, bei dem die zur Bereitstellung einer angeforderten Leistung benötigte Drehzahl eines Verdichters ermittelt wird. Zudem wird die Geschwindigkeit des Verdichters auf eine obere bzw. untere Drehzahlgrenze eines fest vorgegebenen Drehzahlbereichs geregelt, wenn eine benötigte Drehzahl außerhalb des Drehzahlbereichs liegt.

Weiterhin ist in der EP 0 522 878 A2 ein Verfahren zum Betreiben einer Klimaanlage offenbart, bei dem ein Verdichter mit einer Betriebsfrequenz betrieben wird, die zwischen einer Maximal- und einer Minimalfrequenz liegt. Ähnlich dazu beschreibt die WO 2006/072838 A1, einen Verdichter mit einer Drehzahl zwischen einer oberen und einer unteren Drehzahlgrenze zu betreiben.

Aus der GB 2 450 228 A ist es bekannt, einen Verdichter einer Klimaanlage anhand zweier verschiedener Geschwindigkeitssignale zu regeln.

Die US 2009/093911 A1 lehrt bestimmte Drehzahlbereiche eines Verdichters zu sperren.

Der Erfindung liegt die Aufgabe zugrunde, ein Verfahren zum Betreiben einer Kältemaschine anzugeben, durch welches eine drehzahlbedingte Beschädigung des Verdichters ausgeschlossen oder zumindest weitgehend vermieden wird.

Die Lösung dieser Aufgabe erfolgt durch ein Verfahren mit den Merkmalen des Anspruchs 1 oder durch eine Kältemaschine mit den Merkmalen des Anspruchs 9.

Das erfindungsgemäße Verfahren sieht vor, dass zunächst aus der von z.B. einem Bediener gewünschten thermischen Leistung, je nach Anwendung Kühl- oder Heizleistung, eine zur Erreichung der Leistung einzustellende Drehzahl des Verdichters ermittelt wird.

Außerdem wird für den momentan vorliegenden Arbeitspunkt der Kältemaschine ein zulässiger Drehzahlbereich des Verdichters ermittelt, der einen dauerhaft beschädigungsfreien Betrieb des Verdichters ermöglicht. Der zulässige Drehzahlbereich kann beispielsweise als Nachschlagetabelle in einer Steuerung der Kältemaschine gespeichert sein. Jeder Arbeitspunkt ist hierbei zumindest durch eine Verdampfungstemperatur und eine Verflüssigungstemperatur des Kältemittels definiert. Für jede mögliche Kombination aus Verdampfungstemperatur und Verflüssigungstemperatur kann ein zulässiger Drehzahlbereich definiert und in der Kältemaschine hinterlegt sein. Jeder Arbeitspunkt liegt in einem von mehreren Bereichen, innerhalb welcher unterschiedliche zulässige Drehzahlbereiche definiert sind.

Anschließend werden die zur Erreichung der angeforderten Leistung benötigte Drehzahl und der zulässige Drehzahlbereich miteinander verglichen und die Drehzahl des Verdichters so geregelt, dass sie jedenfalls innerhalb des zulässigen Drehzahlbereichs liegt, d.h. also gegenüber der benötigten Drehzahl gegebenenfalls bis auf die untere Drehzahlgrenze angehoben oder bis auf die obere Drehzahlgrenze abgesenkt.

Erfindungsgemäß wird also sichergestellt, dass der Verdichter nicht mit einer unzulässig hohen oder niedrigen Drehzahl betrieben wird, was zu einer dauerhaft zuverlässigen Funktion des Verdichters beiträgt.

Das erfindungsgemäße Verfahren wird dabei während des Betriebs der Kältemaschine wiederholt ausgeführt, um insbesondere auf Änderungen des Arbeitspunkts der Kältemaschine oder auf eine Änderung der gewünschten thermischen Leistung reagieren zu können.

Vorteilhafte Ausführungsformen der Erfindung sind in den Unteransprüchen, der Beschreibung und den Zeichnungen angegeben.

Gemäß einer Ausführungsform wird die benötigte Drehzahl auf der Grundlage eines mathematischen Modells aus der angeforderten Leistung ermittelt. Das mathematische Modell bildet bevorzugt die Eigenschaften der Kältemaschine ab, um eine Berechnung der benötigten Drehzahl des Verdichters aus einem momentanen Zustand der Kältemaschine und der angeforderten Leistung zu ermöglichen.

Vorteilhafterweise basiert das mathematische Modell auf einem Polynom, in welches Parameter des Verdichters, des Kältemittels und des momentanen Arbeitspunktes der Kältemaschine einfließen. Koeffizienten des Polynoms können beispielsweise aus dem verwendeten Kältemittel oder aus dem Typ des Verdichters abgeleitet sein. Die Koeffizienten können ferner empirisch ermittelt sein.

Zusätzlich können weitere Parameter in das mathematische Modell einfließen, beispielsweise eine Unterkühlung des in einem Verflüssiger der Kältemaschine verflüssigten Kältemittels, eine Druckgastemperatur und/oder eine Sauggastemperatur.

Vorteilhafterweise wird die Drehzahl des Verdichters durch einen geschlossenen Regelkreis geregelt. Dies bedeutet, dass eine momentane Drehzahl des Verdichters sowie die angeforderte Leistung und der vorliegende Arbeitspunkt der Kältemaschine ständig überwacht werden und die Drehzahl des Verdichters kontinuierlich auf der Grundlage von benötigter Drehzahl und zulässigem Drehzahlbereich nachgeregelt wird.

Gemäß einer weiteren Ausführungsform wird der Betrieb des Verdichters bei einer innerhalb des zulässigen Drehzahlbereichs liegenden, gesperrten

Drehzahl unterbunden. Aufgrund der mechanischen Eigenschaften des Verdichters und möglicherweise angrenzender Komponenten der Kältemaschine können bei einer bestimmten Drehzahl Resonanzschwingungen auftreten, die eine Beschädigung des Verdichters und/oder eventuell angrenzender Komponenten der Kältemaschine bewirken können. Um derartige schädliche Resonanzschwingungen zu vermeiden, wird daher eine solche Drehzahl gesperrt, d.h. für unzulässig erklärt und somit im Betrieb ausgespart, bei welcher Resonanzen erfahrungsgemäß mit hoher Wahrscheinlichkeit auftreten.

Bevorzugt ist die gesperrte Drehzahl eine vorbestimmte, zum Beispiel manuell eingegebene, Drehzahl. Eine gesperrte Drehzahl kann beispielsweise durch Simulation oder empirisch ermittelt werden und anschließend in einer Steuerung der Kältemaschine gespeichert werden.

Vorteilhafterweise wird die gesperrte Drehzahl, insbesondere während des Betriebs der Kältemaschine, automatisch ermittelt. Werden während des Betriebs beispielsweise unerwartet starke Schwingungen detektiert, z.B. durch Körperschallmessung, kann die Drehzahl, bei der die Schwingungen auftreten, während des Betriebs der Kältemaschine gesperrt werden. Die Drehzahl des Verdichters wird dann unter Berücksichtigung der gewünschten Leistung entsprechend verringert oder erhöht, um die gesperrte Drehzahl zu umgehen.

Eine vorbestimmte und automatische Sperrung von Drehzahlen ist dabei sowohl alternativ als auch parallel möglich.

Gemäß einer weiteren Ausführungsform wird eine Toleranzzeitdauer für jeden Arbeitspunkt mit einer zulässigen Drehzahl von Null vorgesehen und der Verdichter bei dem Arbeitspunkt längstens für die Toleranzzeitdauer mit einer Drehzahl von ungleich Null betrieben. Der Verdichter wird also an solchen Arbeitspunkten, an welchen dieser eigentlich nicht betrieben werden sollte und für welche deshalb eine zulässige Drehzahl von Null vorgesehen ist, nicht sofort gestoppt, sondern für die Toleranzzeitdauer (z.B. 10 Sekunden) weiter betrieben. Innerhalb der Toleranzzeitdauer kann versucht werden, den Arbeitspunkt derart zu verschieben, dass der Verdichter in einem zulässigen Drehzahlbereich betrieben werden kann. Eine Verschiebung des Arbeitspunktes kann beispielsweise durch eine veränderte Stellung des Expansionsventils erfolgen.

Das Vorsehen der Toleranzzeitdauer verhindert somit unnötige Notabschaltungen des Verdichters, wenn ein Arbeitspunkt mit einer zulässigen Drehzahl von Null lediglich kurzzeitig erreicht wird. Die Vermeidung derartiger Notabschaltungen wirkt sich nicht nur auf die Lebensdauer des Verdichters, sondern auch auf die Wirtschaftlichkeit der Kältemaschine positiv aus.

Nachfolgend wird die Erfindung rein beispielhaft anhand einer möglichen Ausführungsform unter Bezugnahme auf die beigefügten Zeichnungen beschrieben. Es zeigen:
- Fig. 1: eine schematische Darstellung einer erfindungsgemäßen Kältemaschine;
- Fig. 2: einen Zusammenhang zwischen Arbeitspunkt und maximal zulässiger Drehzahl;
- Fig. 3: Bereiche von Arbeitspunkten mit einer vorbestimmten Toleranzzeitdauer.

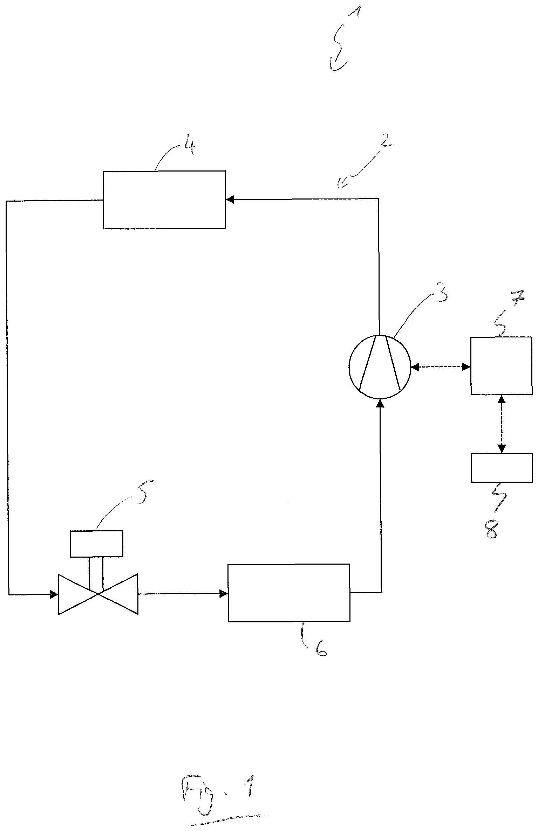

In Fig. 1 ist schematisch eine erfindungsgemäße Kältemaschine dargestellt, welche in dem gezeigten Ausführungsbeispiel als Wärmepumpe 1 betrieben wird. Die Wärmepumpe 1 umfasst einen Kältemittelkreislauf 2, welcher im Normalbetrieb in einer durch Pfeile angedeuteten Richtung von Kältemittel durchströmt wird. Zur Verdichtung gasförmigen Kältemittels, welches auch Sauggas genannt wird, umfasst die Wärmepumpe 1 einen Verdichter 3, der das Kältemittel komprimiert und pumpt. Das von dem Verdichter 3 komprimierte Kältemittel wird einem Verflüssiger 4 zugeleitet, welcher das Kältemittel verflüssigt und dabei Wärmeenergie an seine Umgebung abgibt. Aus dem Verflüssiger 4 tritt flüssiges Kältemittel aus, welches einem Expansionsventil 5 zugeführt wird. Durch das Expansionsventil 5 wird das Kältemittel expandiert, um anschließend in einem Verdampfer 6 verdampft zu werden und dabei der Umgebung des Verdampfers 6 Wärme zu entziehen. Das durch den Verdampfer 6 verdampfte Kältemittel wird anschließend wieder dem Verdichter 3 zugeführt und erneut komprimiert.

Der Verdichter 3 ist drehzahlgeregelt und wird durch eine Steuerung 7 gesteuert, welche mit einer Kommunikationsschnittstelle 8 verbunden ist.

Während des Betriebs der Wärmepumpe 1 wird der Steuerung 7 über die Kommunikationsschnittstelle 8 eine gewünschte thermische Leistung übermittelt, im vorliegenden Ausführungsbeispiel eine gewünschte Heizleistung. Aus der gewünschten thermischen Leistung berechnet die Steuerung 7 mittels eines mathematischen Modells eine Drehzahl, mit welcher der Verdichter 3 betrieben werden muss, um die gewünschte thermische Leistung bereitzustellen, hier benötigte Drehzahl des Verdichters 3 genannt.

Um eine Beschädigung des Verdichters 3 zu vermeiden, überprüft die Steuerung 7 außerdem anhand der momentan vorliegenden Verdampfungs- und Verflüssigungstemperatur des Kältemittels, welcher Drehzahlbereich für den Verdichter 3 zulässig ist. Dazu sind in der Steuerung 7 zulässige Drehzahlen für verschiedene Arbeitspunkte gespeichert, welche jeweils durch eine Verdampfungs- und Verflüssigungstemperatur des Kältemittels definiert sind.

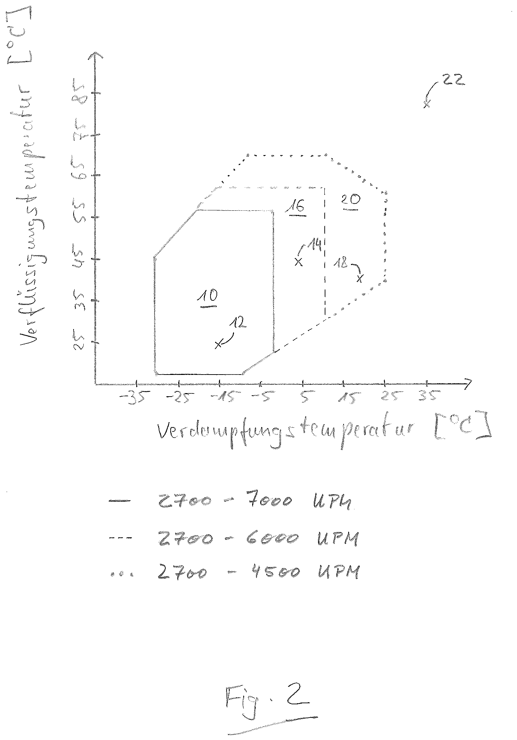

In Fig. 2 ist ein Diagramm dargestellt, welches einen in der Steuerung 7 gespeicherten Zusammenhang zwischen Arbeitspunkten der Wärmepumpe 1 und zulässigen Drehzahlen des Verdichters 3 zeigt.

In dem Diagramm von Fig. 2 sind beispielhaft drei Bereiche angegeben, innerhalb welcher unterschiedliche zulässige Drehzahlbereiche des Verdichters 3 definiert sind. Es können aber auch weniger oder mehr als drei Bereiche vorhanden sein.

In einem ersten Bereich 10, der durch eine Umrandung mit durchgezogenem Strich dargestellt ist, sind Drehzahlen des Verdichters 3 von 2700 bis 7000 Umdrehungen pro Minute zulässig. Wird die Wärmepumpe 1 so betrieben, dass die Verdampfungstemperatur bei -15°C und die Verflüssigungstemperatur bei +25°C liegt, so liegt ein entsprechender erster Arbeitspunkt 12 in dem ersten Bereich 10. Daraus ergibt sich, dass der Verdichter 3 an dem ersten Arbeitspunkt 12 mit minimal 2700 Umdrehungen pro Minute und maximal 7000 Umdrehungen pro Minute betrieben werden darf.

Wird zur Erreichung der gewünschten thermischen Leistung tatsächlich eine Drehzahl von beispielsweise 8000 Umdrehungen pro Minute benötigt, so regelt die Steuerung 7 die Drehzahl des Verdichters 3 zur Vermeidung einer Beschädigung desselben auf den in dem Diagramm von Fig. 2 hinterlegten zulässigen Maximalwert von 7000 Umdrehungen pro Minute.

Liegt ein zweiter Arbeitspunkt 14 mit einer Verdampfungstemperatur von 5°C und einer Verflüssigungstemperatur von 45°C vor, so befindet sich der zweite Arbeitspunkt 14 in einem zweiten Bereich 16, welcher durch eine gestrichelte Linie begrenzt wird. In dem zweiten Bereich 16 beträgt die minimal zulässige Drehzahl des Verdichters 2700 Umdrehungen pro Minute und die maximal zulässige Drehzahl 6000 Umdrehungen pro Minute. Die Drehzahl wird folglich auf 6000 Umdrehungen pro Minute geregelt, wenn die benötigte Drehzahl größer sein sollte.

Ein dritter Arbeitspunkt 18 wird durch eine Verdampfungstemperatur von 20°C und eine Verflüssigungstemperatur von 40°C definiert und liegt somit in einem dritten Bereich 20, welcher durch eine gepunktete Umrandung abgegrenzt wird und in welchem die minimal zulässige Drehzahl des Verdichters 2700 Umdrehungen pro Minute und die maximal zulässige Drehzahl 4500 Umdrehungen pro Minute beträgt. Wird die Wärmepumpe 1 an dem dritten Arbeitspunkt 18 betrieben und ist die benötigte Drehzahl größer als 4500 Umdrehungen pro Minute, so regelt die Steuerung 7 den Verdichter 3 derart, dass die Drehzahl des Verdichters 3 4500 Umdrehungen pro Minute nicht überschreitet.

Sollte die benötigte Drehzahl hingegen kleiner als 2700 Umdrehungen pro Minute sein und der momentane Arbeitspunkt in einem der drei dargestellten Bereiche 10, 16, 20 liegen, so wird die Drehzahl des Verdichters 3 durch die Steuerung 7 auf die für alle drei Bereiche 10, 16, 20 zulässige untere Drehzahlgrenze von 2700 Umdrehungen pro Minute geregelt.

Dagegen wird der Verdichter 3 mit der benötigten Drehzahl betrieben, wenn die benötigte Drehzahl am entsprechenden Arbeitspunkt innerhalb des jeweils zulässigen Drehzahlbereichs liegt.

Für Arbeitspunkte außerhalb des ersten, zweiten oder dritten Bereichs 10, 16, 20 ist die zulässige Drehzahl des Verdichters 3 Null, d.h. hier darf der Verdichter 3 nicht betrieben werden. Wird die Wärmepumpe 1 beispielsweise an einem vierten Arbeitspunkt 22 bei einer Verdampfungstemperatur von 35°C und einer Verflüssigungstemperatur von 85°C betrieben, schaltet die Steuerung 7 den Verdichter 3 ab, um eine Beschädigung desselben zu vermeiden.

Um einen möglichst unterbrechungsfreien Betrieb der Wärmepumpe 1 zu ermöglichen sind in der Steuerung 7 zudem Toleranzzeitdauern gespeichert. Diese geben an, wie lange der Verdichter 3 an Arbeitspunkten betrieben werden darf, für die eine zulässige Drehzahl von Null definiert ist.

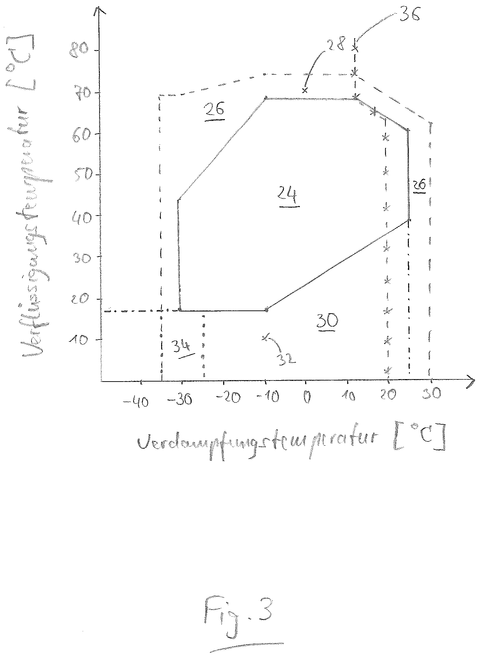

Die in der Steuerung 7 gespeicherten Toleranzzeitdauern sind in Fig. 3 dargestellt. In Fig. 3 sind Bereiche von Arbeitspunkten aufgetragen, für die Toleranzzeitdauern vorgesehen sind. Dabei ist ein erlaubter Bereich 24 dargestellt, welcher den ersten, zweiten und dritten Bereichen 10, 16, 20 von Fig. 2 zusammengenommen entspricht. Außerhalb des erlaubten Bereichs 24 ist durch eine gestrichelte Linie ein erster Toleranzbereich 26 abgegrenzt, in welchem der Verdichter 3 für maximal 10 Sekunden betrieben werden darf.

Stellt die Steuerung 7 also fest, dass die Wärmepumpe 1 an einem fünften Arbeitspunkt 28 bei einer Verdampfungstemperatur von 0°C und einer Verflüssigungstemperatur von 70°C betrieben wird, versucht die Steuerung 7 den Arbeitspunkt innerhalb von 10 Sekunden in den erlaubten Bereich 24 zu verschieben. Eine Verschiebung des Arbeitspunkts ist beispielsweise durch eine Veränderung der Öffnung des Expansionsventils 5 möglich, welche durch die Steuerung 7 entsprechend eingestellt wird. Liegt der Arbeitspunkt länger als 10 Sekunden in dem ersten Toleranzbereich 26, so schaltet die Steuerung 7 den Verdichter 3 ab.

Wird die Wärmepumpe 1 in einem zweiten Toleranzbereich 30 betrieben, beispielsweise an einem sechsten Arbeitspunkt 32 bei einer Verdampfungstemperatur von -10°C und einer Verflüssigungstemperatur von + 10°C, muss der Arbeitspunkt im regulären Betrieb innerhalb von 30 Minuten in den erlaubten Bereich 24 verlagert werden.

Arbeitet die Wärmepumpe 1 bei Betriebsbeginn in dem zweiten Toleranzbereich 30, muss der momentane Arbeitspunkt der Wärmepumpe 1 innerhalb von einer Minute in den erlaubten Bereich 24 verlagert werden. Andernfalls schaltet die Steuerung 7 den Verdichter 3 ab.

Liegt ein Arbeitspunkt in einem dritten Toleranzbereich 34, so darf die Wärmepumpe 1 über ihre gesamte Lebensdauer maximal 2000 Stunden in dem dritten Toleranzbereich 34 betrieben werden. Zur Einhaltung dieser Bedingung protokolliert die Steuerung 7 die Zeitdauer, während der die Wärmepumpe 1 bereits in dem dritten Toleranzbereich 34 betrieben wurde.

Durch die Toleranzzeitdauern wird für den Fall, dass ein Arbeitspunkt nur geringfügig außerhalb des erlaubten Bereichs 24 liegt, die Möglichkeit geschaffen, durch einen Eingriff der Steuerung 7 innerhalb der Toleranzzeitdauer den erlaubten Bereich 24 zu erreichen. Wird der erlaubte Bereich 24 innerhalb der Toleranzzeitdauer erreicht, kann ein Abschalten des Verdichters unterbleiben.

Weiterhin ist in der Steuerung 7 ein Bereich von Arbeitspunkten gespeichert, in welchem ein maximaler Betriebsdruck der Wärmepumpe 1 überschritten ist. Eine Grenze 36 eines solchen Bereichs ist in Fig. 3 durch eine Linie mit Kreuzmarkierungen dargestellt. Wird die Wärmepumpe 1 an einem Arbeitspunkt betrieben, dessen Verdampfungstemperatur und/oder Verflüssigungstemperatur höher ist als bei einem auf der Grenze 36 liegenden Arbeitspunkt, so wird eine Öffnung des Expansionsventils 5 durch die Steuerung 7 verringert. Auf diese Weise kann der Betriebsdruck in dem Kreislauf 2 der Wärmepumpe 1 gesenkt werden.

### Bezugszeichenliste

- 1: Wärmepumpe
- 2: Kreislauf
- 3: Verdichter
- 4: Verflüssiger
- 5: Expansionsventil
- 6: Verdampfer
- 7: Steuerung
- 8: Kommunikationsschnittstelle
- 10: erster Bereich
- 12: erster Arbeitspunkt
- 14: zweiter Arbeitspunkt
- 16: zweiter Bereich
- 18: dritter Arbeitspunkt
- 20: dritter Bereich
- 22: vierter Arbeitspunkt
- 24: erlaubter Bereich
- 26: erster Toleranzbereich
- 28: fünfter Arbeitspunkt
- 30: zweiter Toleranzbereich
- 32: sechster Arbeitspunkt
- 34: dritter Toleranzbereich
- 36: Grenze

## Patentansprüche

1. Verfahren zum Betreiben einer Kältemaschine, insbesondere einer Wärmepumpe (1), welche einen von Kältemittel durchströmten Kältekreislauf (2) mit einem drehzahlgeregelten Verdichter (3) umfasst, wobei
eine gewünschte thermische Leistung der Kältemaschine angefordert wird,
eine zur Bereitstellung der angeforderten Leistung benötigte Drehzahl des Verdichters (3) ermittelt wird,
ein momentan vorliegender Arbeitspunkt der Kältemaschine ermittelt wird, wobei der Arbeitspunkt (12, 14, 18, 22, 28, 32) zumindest durch eine Verdampfungstemperatur und eine Verflüssigungstemperatur des Kältemittels definiert ist,
für den momentan vorliegenden Arbeitspunkt (12, 14, 18, 22, 28, 32) der Kältemaschine ein zulässiger Drehzahlbereich des Verdichters (3) mit einer dem momentan vorliegenden Arbeitspunkt jeweils zugeordneten oberen und unteren Drehzahlgrenze ermittelt wird, wobei jeder Arbeitspunkt (12, 14, 18, 22, 28, 32) in einem von mehreren Bereichen (10, 16, 20, 26, 30, 34) liegt, innerhalb welcher unterschiedliche zulässige Drehzahlbereiche definiert sind, und
die Drehzahl des Verdichters (3) auf die benötigte Drehzahl geregelt wird, wenn die benötigte Drehzahl innerhalb des zulässigen Drehzahlbereichs liegt, auf die untere Drehzahlgrenze geregelt wird, wenn die benötigte Drehzahl unterhalb des zulässigen Drehzahlbereichs liegt, und auf die obere Drehzahlgrenze geregelt wird, wenn die benötigte Drehzahl oberhalb des zulässigen Drehzahlbereichs liegt.

2. Verfahren nach Anspruch 1,
**dadurch gekennzeichnet, dass**
die benötigte Drehzahl auf der Grundlage eines mathematischen Modells aus der angeforderten Leistung ermittelt wird.

3. Verfahren nach Anspruch 2,
**dadurch gekennzeichnet, dass**
das mathematische Modell auf einem Polynom basiert, in welches Parameter des Verdichters (3), des Kältemittels und des momentanen Arbeitspunktes (12, 14, 18, 22, 28, 32) einfließen.

4. Verfahren nach zumindest einem der vorstehenden Ansprüche,
**dadurch gekennzeichnet, dass**
die Drehzahl des Verdichters (3) durch einen geschlossenen Regelkreis geregelt wird.

5. Verfahren nach zumindest einem der vorstehenden Ansprüche,
**dadurch gekennzeichnet , dass**
der Betrieb des Verdichters (3) bei einer innerhalb des zulässigen Drehzahlbereichs liegenden, gesperrten Drehzahl unterbunden wird.

6. Verfahren nach Anspruch 5,
**dadurch gekennzeichnet , dass**
die gesperrte Drehzahl eine vorbestimmte, z.B. manuell eingegebene, Drehzahl ist.

7. Verfahren nach Anspruch 5 oder 6,
**dadurch gekennzeichnet, dass**
die gesperrte Drehzahl, insbesondere während des Betriebs der Kältemaschine (1), automatisch ermittelt wird.

8. Verfahren nach zumindest einem der vorstehenden Ansprüche,
**dadurch gekennzeichnet, dass**
eine Toleranzzeitdauer für jeden Arbeitspunkt (22, 28, 32) mit einer zulässigen Drehzahl von Null vorgesehen wird und der Verdichter (3) bei dem Arbeitspunkt (22, 28, 32) längstens für die Toleranzzeitdauer mit einer Drehzahl von ungleich Null betrieben wird.

9. Kältemaschine, insbesondere Wärmepumpe (1), welche einen von Kältemittel durchströmten Kältekreislauf (2) mit einem drehzahlgeregelten Verdichter (3) umfasst,
wobei die Kältemaschine eine Kommunikationsschnittstelle (8) zur Eingabe der Anforderung einer gewünschten thermischen Leistung der Kältemaschine und eine Steuerung (7) umfasst, welche ausgestaltet ist, um eine zur Bereitstellung der angeforderten Leistung benötigte Drehzahl des Verdichters (3) zu ermitteln, um einen momentan vorliegenden Arbeitspunkt der Kältemaschine zu ermitteln, wobei der Arbeitspunkt (12, 14, 18, 22, 28, 32) zumindest durch eine Verdampfungstemperatur und eine Verflüssigungstemperatur des Kältemittels definiert ist, um für den momentan vorliegenden Arbeitspunkt (12, 14, 18, 22, 28, 32) der Kältemaschine einen zulässigen Drehzahlbereich des Verdichters (3) mit einer dem momentan vorliegenden Arbeitspunkt jeweils zugeordneten oberen und unteren Drehzahlgrenze zu ermitteln, wobei jeder Arbeitspunkt (12, 14, 18, 22, 28, 32) in einem von mehreren Bereichen (10, 16, 20, 26, 30, 34) liegt, innerhalb welcher unterschiedliche zulässige Drehzahlbereiche definiert sind, und um die Drehzahl des Verdichters (3) auf die benötigte Drehzahl zu regeln, wenn die benötigte Drehzahl innerhalb des zulässigen Drehzahlbereichs liegt, auf die untere Drehzahlgrenze zu regeln, wenn die benötigte Drehzahl unterhalb des zulässigen Drehzahlbereichs liegt, und auf die obere Drehzahlgrenze zu regeln, wenn die benötigte Drehzahl oberhalb des zulässigen Drehzahlbereichs liegt.

## Claims

1. A method of operating a refrigerating machine, in particular a heat pump (1), which comprises a refrigeration circuit (2) which is flowed through by a refrigerant and which has a speed-regulated compressor (3),
wherein
a desired thermal power of the refrigerating machine is requested;
a rotational speed of the compressor (3) required for providing the requested power is determined;
a currently present working point of the refrigerating machine is determined, with the working point (12, 14, 18, 22, 28, 32) at least being defined by an evaporation temperature and a condensing temperature of the refrigerant;
a permissible rotational speed range of the compressor (3), having an upper and lower rotational speed limit which are each associated with the currently present working point, is determined for the currently present working point (12, 14, 18, 22, 28, 32) of the refrigerating machine, with each working point (12, 14, 18, 22, 28, 32) lying in one of a plurality of ranges (10, 16, 20, 26, 30, 34) within which different permissible rotational speed ranges are defined; and
the rotational speed of the compressor (3) is regulated to the required rotational speed when the required rotational speed lies within the permissible rotational speed range, said rotational speed of the compressor (3) is regulated to the lower rotational speed limit when the required rotational speed lies below the permissible rotational speed range, and said rotational speed of the compressor (3) is regulated to the upper rotational speed limit when the required rotational speed lies above the permissible rotational speed range.

2. A method in accordance with claim 1,
**characterized in that**
the required rotational speed is determined from the requested power on the basis of a mathematical model.

3. A method in accordance with claim 2,
**characterized in that**
the mathematical model is based on a polynomial in which parameters of the compressor (3), of the refrigerant and of the current working point (12, 14, 18, 22, 28, 32) are included.

4. A method in accordance with at least one of the preceding claims,
**characterized in that**
the rotational speed of the compressor (3) is regulated by a closed control loop.

5. A method in accordance with at least one of the preceding claims,
**characterized in that**
the operation of the compressor (3) is prevented at a blocked rotational speed which lies within the permissible rotational speed range.

6. A method in accordance with claim 5,
**characterized in that**
the blocked rotational speed is a predetermined rotational speed, e.g. a manually input rotational speed.

7. A method in accordance with claim 5 or claim 6,
**characterized in that**
the blocked rotational speed is automatically determined, in particular during the operation of the refrigerating machine (1).

8. A method in accordance with at least one of the preceding claims,
**characterized in that**
a tolerance time period is provided for each working point (22, 28, 32) having a permissible rotational speed of zero and the compressor (3) is operated at the working point (22, 28, 32) at a rotational speed of not equal to zero for at most the tolerance time period.

9. A refrigerating machine, in particular a heat pump (1), which comprises a refrigeration circuit (2) which is flowed through by a refrigerant and which has a speed-regulated compressor (3), wherein the refrigerating machine comprises a communication interface (8) for inputting the request for a desired thermal power of the refrigerating machine and a control (7) which is configured to determine a rotational speed of the compressor (3) required for providing the requested power; to determine a currently present working point of the refrigerating machine, wherein the working point (12, 14, 18, 22, 28, 32) is at least defined by an evaporation temperature and a condensing temperature of the refrigerant; to determine a permissible rotational speed range of the compressor (3), having an upper and lower rotational speed limit which are each associated with the currently present working point, for the currently present working point (12, 14, 18, 22, 28, 32) of the refrigerating machine, with each working point (12, 14, 18, 22, 28, 32) lying in one of a plurality of ranges (10, 16, 20, 26, 30, 34) within which different permissible rotational speed ranges are defined; and to regulate the rotational speed of the compressor (3) to the required rotational speed when the required rotational speed lies within the permissible rotational speed range, to regulate said rotational speed of the compressor (3) to the lower rotational speed limit when the required rotational speed lies below the permissible rotational speed range, and to regulate said rotational speed of the compressor (3) to the upper rotational speed limit when the required rotational speed lies above the permissible rotational speed range.

## Revendications

1. Procédé de fonctionnement d'une machine frigorifique, en particulier d'une pompe à chaleur (1), qui comprend un circuit de fluide frigorigène (2) traversé par un fluide frigorigène et comportant un compresseur (3) à vitesse de rotation régulée,
dans lequel
une puissance thermique souhaitée de la machine frigorifique est demandée,
une vitesse de rotation du compresseur (3) requise pour fournir la puissance demandée est déterminée,
un point de fonctionnement instantané de la machine frigorifique est déterminé, le point de fonctionnement (12, 14, 18, 22, 28, 32) étant défini au moins par une température d'évaporation et par une température de liquéfaction du fluide frigorigène,
pour le point de fonctionnement instantané (12, 14, 18, 22, 28, 32) de la machine frigorifique, une plage de vitesse de rotation admissible du compresseur (3) avec des limites de vitesse de rotation supérieure et inférieure respectivement associées au point de fonctionnement instantané est déterminée, chaque point de fonctionnement (12, 14, 18, 22, 28, 32) se situant dans l'une parmi plusieurs plages (10, 16, 20, 26, 30, 34) au sein desquelles différentes plages de vitesse de rotation admissibles sont définies, et
la vitesse de rotation du compresseur (3) est régulée à la vitesse de rotation requise si la vitesse de rotation requise se situe dans la plage de vitesse de rotation admissible, elle est régulée à la limite inférieure de vitesse de rotation si la vitesse de rotation requise est inférieure à la plage de vitesse de rotation admissible, et elle est régulée à la limite supérieure de vitesse de rotation si la vitesse de rotation requise est supérieure à la plage de vitesse de rotation admissible.

2. Procédé selon la revendication 1,
**caractérisé en ce que**
la vitesse de rotation requise est déterminée à partir de la puissance demandée sur la base d'un modèle mathématique.

3. Procédé selon la revendication 2,
**caractérisé en ce que**
le modèle mathématique est basé sur un polynôme dans lequel sont pris en compte les paramètres du compresseur (3), du fluide frigorigène et du point de fonctionnement instantané (12, 14, 18, 22, 28, 32).

4. Procédé selon l'une au moins des revendications précédentes,
**caractérisé en ce que**
la vitesse de rotation du compresseur (3) est régulée par un circuit de régulation fermé.

5. Procédé selon l'une au moins des revendications précédentes,
**caractérisé en ce que**
le fonctionnement du compresseur (3) est interdit à une vitesse de rotation bloquée située au sein de la plage de vitesse admissible.

6. Procédé selon la revendication 5,
**caractérisé en ce que**
la vitesse de rotation bloquée est une vitesse de rotation prédéterminée, par exemple saisie manuellement.

7. Procédé selon la revendication 5 ou 6,
**caractérisé en ce que**
la vitesse de rotation bloquée est déterminée automatiquement, en particulier pendant le fonctionnement de la machine frigorifique (1).

8. Procédé selon l'une au moins des revendications précédentes,
**caractérisé en ce que**
pour chaque point de fonctionnement (22, 28, 32) est prévue une durée de tolérance avec une vitesse de rotation admissible de zéro, et
au point de fonctionnement (22, 28, 32), le compresseur (3) fonctionne à une vitesse de rotation différente de zéro au maximum pendant la durée de tolérance.

9. Machine frigorifique, en particulier pompe à chaleur (1), qui comprend un circuit de fluide frigorigène (2) traversé par un fluide frigorigène et comportant un compresseur (3) à vitesse de rotation régulée,
dans laquelle
la machine frigorifique comprend une interface de communication (8) pour entrer la demande d'une puissance thermique souhaitée de la machine frigorifique et un dispositif de commande (7) qui est conçu pour déterminer une vitesse de rotation du compresseur (3) requise pour fournir la puissance demandée afin de déterminer un point de fonctionnement instantané de la machine frigorifique,
le point de fonctionnement (12, 14, 18, 22, 28, 32) étant défini au moins par une température d'évaporation et par une température de liquéfaction du fluide frigorigène, afin de déterminer, pour le point de fonctionnement instantané (12, 14, 18, 22, 28, 32) de la machine frigorifique, une plage de vitesse de rotation admissible du compresseur (3) avec des limites de vitesse de rotation supérieure et inférieure respectivement associées au point de fonctionnement instantané, chaque point de fonctionnement (12, 14, 18, 22, 28, 32) se situant dans l'une parmi plusieurs plages (10, 16, 20, 26, 30, 34) au sein desquelles différentes plages de vitesse de rotation admissibles sont définies, et afin de réguler la vitesse de rotation du compresseur (3) à la vitesse de rotation requise si la vitesse de rotation requise se situe au sein de la plage de vitesse de rotation admissible, afin de la réguler à la limite de vitesse de rotation inférieure si la vitesse de rotation requise est inférieure à la plage de vitesse de rotation admissible, et afin de la réguler à la limite de vitesse de rotation supérieure si la vitesse de rotation requise est supérieure à la plage de vitesse admissible.
